(19) Europäisches Patentamt
European Patent Office
Office européen des brevets

(11) Publication number: **0 434 396 B1**

# (12) EUROPEAN PATENT SPECIFICATION

(45) Date of publication of patent specification: **02.11.94**

(51) Int. Cl.5: **C08L 83/04**, C08K 3/04

(21) Application number: **90313925.1**

(22) Date of filing: **19.12.90**

## (54) Rubber compositions, cured rubbers, and preparation thereof.

(30) Priority: **19.12.89 JP 328742/89**

(43) Date of publication of application:
**26.06.91 Bulletin 91/26**

(45) Publication of the grant of the patent:
**02.11.94 Bulletin 94/44**

(84) Designated Contracting States:
**DE FR GB**

(56) References cited:
**FR-A- 1 072 769**
**FR-A- 2 637 604**
**US-A- 4 842 943**

**PATENT ABSTRACTS OF JAPAN, vol. 12, no. 426 (C-542)(3273)10 November 1988 ; & JP-A-63 156 858**

**PATENT ABSTRACTS OF JAPAN, vol. 10, no. 292 (C-376)(2348)3 October 1986 ; & JP-A-61 108 661**

(73) Proprietor: **SHIN-ETSU CHEMICAL CO., LTD.**
**6-1, Ohtemachi 2-chome**
**Chiyoda-ku Tokyo (JP)**

(72) Inventor: **Takahashi, Masaharu**
**No. 3318-4 Itahana**
**Annaka-shi, Gunma-ken (JP)**
Inventor: **Nakamura, Tsutomu**
**No. 791-4 Yanase**
**Annaka-shi, Gunma-ken (JP)**
Inventor: **Numata, Kazuo**
**No. 1542-3 Ooaza Nikenzaike,**
**Matsuida-machi**
**Usui-gun, Gunma-ken (JP)**

(74) Representative: **Stoner, Gerard Patrick et al**
**MEWBURN ELLIS**
**York House**
**23 Kingsway**
**London WC2B 6HP (GB)**

**EP 0 434 396 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to rubber compositions and rubber articles made from them, particularly those affording an electric resistivity in the semiconductive range of from $10^3$ to $10^{10}$ Ω.cm; also to methods for preparing the same.

Rubbery materials are usually electric insulators. A number of conductive rubbers are available as mixtures of rubbery material and conductive agents. For example, rubbers having carbon black blended therein to provide an electric resistivity of from $10^{-1}$ to $10^2$ Ω.cm are conductive rubbers which are used in various applications.

Silicone rubber is also widely used as electrically insulating rubber because of its heat resistance, low-temperature resistance and weatherability. FR-A-1072769 describes a silicone rubber composition with high heat resistance made from:

a polydiorganosiloxane in which the organic radicals are lower alkyl radicals or aryl radicals and between 0.1 to 12.0% of carbon black. At least 75% of the organic radicals are lower alkyl radicals.

Silicone rubber can also be used as conductive silicone rubber by adding conductive agents like the other rubbery materials.

The conductive agents which are added to silicone rubber for imparting electric conductivity are typically carbon black, graphite, various metal powders such as silver, nickel, and copper, various non-conductive particles and monofilaments surface treated with silver or similar metals, carbon fibres, and metallic fibres. By mixing these conductive agents, the electric resistivity of silicone rubber can be reduced to the order of $10^{10}$ to $10^{-3}$ Ω.cm depending on the type and amount of conductive agent without detracting from the inherent properties of silicone rubber.

However, silicone rubbers having conductive carbon black such as Ketjen Black® and acetylene black blended therein show a substantial variation of electric resistivity in the semiconductive range of from $10^3$ to $10^{10}$ Ω.cm. It is difficult to maintain the electric resistivity of carbon black filled silicone rubbers stable probably because the dispersion of carbon substantially varies with molding conditions.

A variety of rubbery parts are used in business machines. For example, dry copying machines involve rubber roll members such as charging rolls, transfer rolls, developing rolls, sheet feeding rolls, fixing rolls, pressing rolls, electricity removing rolls, cleaning rolls, and oil applicator rolls and other rubbery members such as cleaning blades and fixing belts. These rubbery members represent a demand for rubbery material having electric resistivity in the semiconductive range. It would be desirable to provide rubbery material exhibiting a minimal variation of electric resistivity in the semiconductive range, that is, a stable electric resistivity, for such uses.

Generally, we seek to provide new conductive rubber compositions.

More preferably, we aim also (i) to provide a new and improved rubber composition capable of affording rubber articles exhibiting a limited variation of electric resistivity in the semiconductive range, and/or (ii) to provide a rubber composition capable of affording rubber articles having a stable electric resistivity independent of molding conditions. A further object is to provide a cured rubber obtained therefrom and a method for forming such a rubber composition.

The inventors have found that by mixing (A) a silicone rubber composition including an organopolysiloxane having the average composition formula (1) defined below and conductive carbon black with (B) a silicone rubber composition including an organopolysiloxane having the average composition formula (2) defined below, they could obtain rubber compositions yielding rubber articles having a well stabilized electric resistivity in the range of from $10^3$ to $10^{10}$ Ω·cm.

Average composition formula (1):

$$R^1{}_nSiO_{(4-n)/2} \quad (1)$$

In formula (1), $R^1$ is a substituted or unsubstituted monovalent hydrocarbon group having 1 to 10 carbon atoms, up to 95 mol% of $R^1$ groups being methyl groups, and n is a positive number of from 1.95 to 2.05.

Average composition formula (2):

$$R^2{}_mSiO_{(4-m)/2} \quad (2)$$

In formula (2), $R^2$ is a substituted or unsubstituted monovalent hydrocarbon group having 1 to 10 carbon atoms, at least 98 mol% of $R^2$ groups being methyl groups, and m is a positive number of from 1.95 to 2.05.

More particularly, rubber compositions in the form of a mixture of (A) a silicone rubber composition including an organopolysiloxane having average composition formula (1) and conductive carbon black and (B) a silicone rubber composition including an organopolysiloxane having average composition formula (2) had a well stabilized electric resistivity in the semiconductive range with little or no dependence on molding conditions. They showed a variation of electric resistivity of the order of only one figure, which is quite unexpected when compared with conventional silicone rubbers filled with conductive carbon black showing a variation of the order of 4 to 6 figures. The compositions may have improved moldability and vulcanization, and provide cured rubbers which have good rubbery elasticity and low hardness and do not release conductive carbon.

Therefore, the present invention provides a rubber composition comprising, in admixture, (A) a silicone rubber composition including an organopolysiloxane having average composition formula (1) and conductive carbon black and (B) a silicone rubber composition including an organopolysiloxane having average composition formula (2). A cured product obtained by curing or vulcanizing the rubber composition is also encompassed in the present invention. The present invention also provides a method for preparing a rubber composition by mixing the silicone rubber composition (A) with the silicone rubber composition (B) both defined above.

The silicone rubber composition (A) includes an organopolysiloxane having average composition formula (1).

$R^1{}_nSiO_{(4-n)/2}$ (1)

In formula (1), $R^1$ is a substituted or unsubstituted monovalent hydrocarbon group having 1 to 10 carbon atoms, preferably 1 to 6 carbon atoms, for example, alkyl groups such as methyl, ethyl and propyl, cycloalkyl groups such as cyclopentyl and cyclohexyl, alkenyl groups such as vinyl and allyl, cycloalkenyl groups, aryl groups such as phenyl and tolyl, and halogenated or cyano hydrocarbon groups in which some of the hydrogen atoms of these groups are replaced by fluorine atoms, chlorine atoms, and organic groups such as chloromethyl, $\gamma$-trifluoropropyl, perfluoroalkyl and cyano groups. It is required that methyl groups be not more than 95 mol% of $R^1$ groups. Letter n is a positive number of from 1.95 to 2.05.

The preferred organopolysiloxanes are those having a backbone predominantly comprising dimethylpolysiloxane units in which phenyl, vinyl and other groups are additionally introduced. Methyl groups occupy up to 95 mol% of the $R^1$ groups, preferably 70 to 95 mol%, more preferably 70 to 80 mol% of the $R^1$ groups while phenyl groups occupy 5 to 20 mol% of the $R^1$ groups and vinyl groups occupy 0.001 to 10 mol% of the $R^1$ groups.

The preferred organopolysiloxanes have a viscosity of 10 to 10 000 Pa.s (10,000 to 10,000,000 centistokes (cs)), especially 100 to 10 000 Pa.s (100,000 to 10,000,000 cs) at 25°C.

The silicone rubber composition (A) also includes electroconductive carbon black. It may be selected from commonly used types of conductive carbon black, for example, acetylene black, conducting furnace black (CF), super conducting furnace black (SCF), extra conducting furnace black (XCF), conducting channel black (CC), and furnace black and channel black heat treated at elevated temperatures of about 1500°C. More particularly, the acetylene black includes Denka Acetylene Black™ manufactured by Denki Kagaku K. K., Shawinigan Acetylene Black™ manufactured by Shawinigan Chemical Co., the conducting furnace black includes Continex CF™ manufactured by Continental Carbon Co. and Vulcan C™ manufactured by Cabot Corp., the super conducting furnace black includes Continex SCF™ manufactured by Continental Carbon Co. and Vulcan SC™ manufactured by Cabot Corp. the extra conducting furnace black includes Asahi HS-500™ manufactured by Asahi Carbon K.K. and Vulcan XC-72™ manufactured by Cabot Corp., and the conducting channel black includes Corax L™ manufactured by Degussa Co. Also useful are modified furnace blacks commercially available as Ketjen Black EC™ and Ketjen Black EC-600JD™ from Ketjen Black International.

The conductive carbon black may be used alone or in admixture of two or more types, preferably in an amount of from 1 to 50 parts, more preferably from 3 to 20 parts by weight per 100 parts by weight of the organopolysiloxane of formula (1). Less than 1 part of carbon black usually fails to provide desired electric conduction whereas more than 50 parts of carbon black would sometimes result in a harder rubber composition which is rather poor in molding and yields cured products having low mechanical strength.

The silicone rubber composition (B) includes an organopolysiloxane having average composition formula (2).

$R^2{}_mSiO_{(4-m)/2}$ (2)

In formula (2), $R^2$ is a substituted or unsubstituted monovalent hydrocarbon group having 1 to 10 carbon atoms, preferably 1 to 6 carbon atoms as defined for $R^1$. It is required that methyl groups occupy at least 98 mol% of $R^2$ groups. In addition to the methyl groups, $R^2$ preferably contains 0.001 to 2 mol% of vinyl groups. Letter m is a positive number of from 1.95 to 2.05.

Preferably, the rubber composition of the invention contains 5 to 95% by weight, more preferably 20 to 80% by weight of the organopolysiloxane having average composition formula (2).

The rubber composition comprising an organopolysiloxane having average composition formula (1), conductive carbon black, and an organopolysiloxane having average composition formula (2) as defined above according to the invention is obtainable by preparing a silicone rubber composition (A) including the organopolysiloxane of formula (1) and conductive carbon black, separately preparing a silicone rubber composition (B) including the organopolysiloxane of formula (2), and mixing these silicone rubber compositions (A) and (B). Then the phase of carbon black previously dispersed in composition (A) is macroscopically dispersed in composition (B). The macroscopic dispersion used herein means a size of 0.1 to 100 μm and is effective in stabilizing volume resistivity.

More particularly, silicone rubber composition (A) including an organopolysiloxane of average composition formula (1) wherein up to 95 mol% of $R^1$ is methyl and conductive carbon black, and silicone rubber composition (B) including an organopolysiloxane of average composition formula (2) wherein at least 98 mol% of $R^2$ is methyl form an island structure in which two phases dimensioned 0.1 μm to 100 μm are macroscopically dispersed one another. Since the organopolysiloxanes of formulae (1) and (2) have different contents of methyl group, compositions (A) and (B) are not soluble or compatible on a molecular level. Since carbon black provides stronger interaction with an organopolysiloxane as the methyl content of the organopolysiloxane becomes lower, the carbon black added to composition (A) does not migrate to composition (B). Therefore, carbon black is kept uniformly dispersed in the organopolysiloxane of formula (1) as composition (A), which is macroscopically dispersed with composition (B), leading to stable volume resistivity.

In turn, if conductive carbon black were previously blended in silicone rubber composition (B) and this silicone rubber composition (B) were blended with silicone rubber composition (A) which is free of conductive carbon black, or if these three components were mixed at the same time, a microscopic dispersion of conductive carbon black would occur rather than the macroscopic dispersion of conductive carbon black, resulting in a rubber composition having unstable volume resistivity. The term microscopic dispersion corresponds to the size of the carbon black as blended. If conductive carbon black were added to a preblend of organopolysiloxanes of formulae (1) and (2), the carbon black would not undergo macroscopic dispersion, also resulting in unstable volume resistivity.

In the practice of the present invention, silicone rubber composition (A) is obtained by mixing an organopolysiloxane of formula (1) with conductive carbon black. The mixing method is not particularly limited insofar as a uniform preblend is obtained. Mixing methods using conventional rubber compounding mills such as Banbury mixers, pressure kneaders, two-roll and three-roll mills are satisfactory.

It is to be noted that silicone rubber composition (A) may contain wet silica, dry silica, quartz powder, silicone fluid, carbon functional silane and other additives if desired.

The silicone rubber composition (B) can consist solely of an organopolysiloxane of formula (2), but, like composition (A), may contain any ingredients commonly blended in conventional silicone rubber compositions, for example, wet silica, dry silica, quartz powder, low viscosity hydroxyl-terminated silicone fluid, and carbon functional silane if desired. These ingredients are mixed to form silicone rubber composition (B) by any desired mixing method as described for composition (A).

Silicone rubber composition (B) may be a commercially available one, e.g. KE931u, KE951u, KE520 or KE555u of Shin-Etsu Chemical Corporation. Usually composition (B) will not include carbon black.

Silicone rubber compositions (A) and (B) are preferably blended in a weight ratio of from 5:95 to 95:5, more preferably from 20:80 to 80:20 for providing a desired electric resistivity.

Silicone rubber compositions (A) and (B) may be blended by any desired mixing method using conventional rubber compounding mills such as Banbury mixers, pressure kneaders, two-roll and three-roll mills. For facilitating milling operation, quartz powder, wet or dry silica, process oil commonly added to synthetic rubbers, carbon functional silane, modified silicone fluid and other processing aids may be added, if desired.

The rubber composition of the invention may be vulcanized and cured by conventional methods. The curing agent used herein need not have a limited curing mechanism insofar as it functions to vulcanize and cure the rubber composition by utilizing radical, addition, condensation or similar reactions commonly encountered in the vulcanization of conductive silicone rubbers. Any suitable one of conventional well-known curing agents may be used. Typical curing agents are peroxides, for example, alkyl peroxides such

as di-t-butylperoxide and 2,5-dimethyl-2,5-di(t-butylperoxy)hexane, and aralkyl peroxides such as dicumyl peroxide. Also useful are addition reaction curing agents such as organohydrogenpolysiloxanes having at least two silicon-bonded hydrogen atoms in a molecule and platinum series catalysts and condensation curing agents such as polyfunctional alkoxysilanes or siloxanes and organometallic acid salts. The curing agent may be used in such an amount as commonly added to conventional conductive silicone rubbers, for example, 0.1 to 5% by weight for the peroxide curing agent.

Organohydrogenpolysiloxanes usable as cross-linking agents are of the following formula.

$$H_bR^3_cSiO_{(4-b-c)/2}$$

In the formula, $R^3$s are the same or different substituted or unsubstituted monovalent hydrocarbon groups, excluding aliphatic unsaturated groups, preferably having 1 to 10 carbon atoms, for example, alkyl groups such as methyl, ethyl, propyl and butyl groups, aryl groups such as phenyl and tolyl groups, aralkyl groups such as benzyl and $\beta$-phenylethyl groups, and cycloalkyl groups such as cyclohexyl groups, b is a positive number of from 0.002 to 1.0, c is a positive number of from 1.99 to 2.02, and the sum of $b + c$ is in the range of from 1.992 to 3.0. Those organohydrogenpolysiloxanes having at least two hydroxyl groups in a molecule are preferred.

Examples of the organohydrogenpolysiloxane include compounds of the following structural formulae wherein 1 is an integer of 2 to 10, m and n are integers of from 0 to 10, respectively.

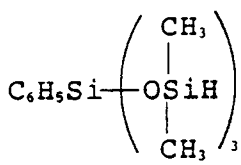 ,

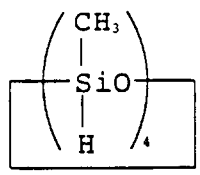 ,

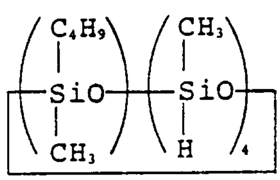 ,

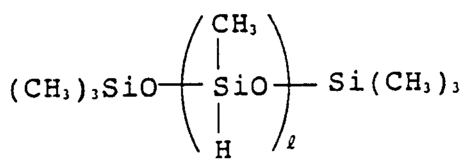 ,

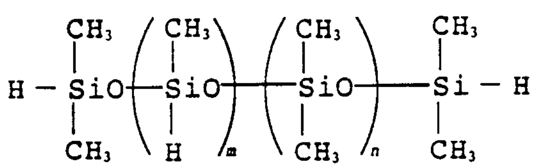

Examples of an alkoxysilane curing agent include

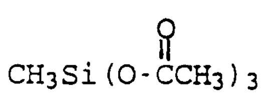 ,

$CH_3Si(OCH_3)_3$ ,

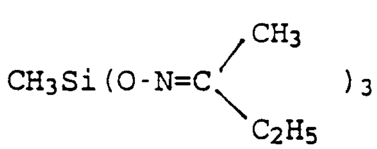 ,

and

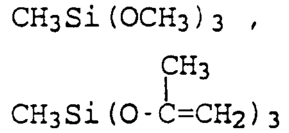 .

The alkoxysilane curing agent is used in an amount of 2 to 50% by weight based on the weight of the organopolysiloxane.

The rubber composition of the invention may be molded by conventional methods such as press molding, extrusion molding, injection molding, and calendering and then cured into articles which are ready

for commercial use.

As has been described, compositions embodying the invention may afford rubber articles exhibiting a limited variation of electric resistivity in the semiconductive range and, in particular, having a stable electric resistivity independent of molding conditions. Compositions may also be improved in moldability and vulcanization, and provide cured rubbers which have good rubbery elasticity and do not release conductive carbon black. Therefore, the rubber composition and cured rubber according to the invention may find a variety of applications in business machines, for example, as rubber roll members such as charging rolls, transfer rolls, developing rolls, sheet feeding rolls, fixing rolls, pressing rolls, electricity removing rolls, cleaning rolls, and oil applicator rolls and other rubbery members such as cleaning blades and fixing belts as used in dry copying machines and in the electrochemical industry and vehicle industry, for example, as automobile parts.

EXAMPLE

Examples of the invention are given below by way of illustration and not by way of limitation. Unless otherwise stated, all parts are by weight.

Examples 1-3 and Comparative Example 1

Silicone rubber composition 1A was obtained by blending the following ingredients in a pressure kneader.

| Ingredients | Parts by weight |
|---|---|
| (1) Methylphenylvinylsiloxane raw rubber consisting of 89.85 mol% of $(CH_3)_2SiO$ units, 0.15 mol% of $(CH_2=CH)(CH_3)SiO$ units, and 10 mol% of $(C_6H_5)(CH_3)SiO$ units and having a polymerization degree of 8,000 | 100 |
| (2) Ketjen Black® EC (manufactured by Ketjen Black International) | 7 |

Silicone rubber composition 1B was obtained by blending the following ingredients in a pressure kneader.

| Ingredients | Parts by weight |
|---|---|
| (3) Dimethylvinylpolysiloxane raw rubber consisting of 99.85 mol% of $(CH_3)_2SiO$ units and 0.15 mol% of $(CH_2=CH)(CH_3)SiO$ units and having a polymerization degree of 8,000 | 100 |
| (4) Silica powder (specific surface area 200 $m^2/g$, Aerogel® 200, manufactured by Nihon Aerogel K.K.) | 15 |
| (5) Hydroxyl-terminated dimethylsiloxane fluid having a polymerization degree of 20 | 5 |

Compositions 1A and 1B were blended in the proportion shown in Table 1 using a roll mill. A rubber compound was prepared by adding dicumyl peroxide to the blend in the proportion shown in Table 1. The compound was shaped into sheets by heat pressing at 170 °C and 980 $N/cm^2$ (100 $kgf/cm^2$) for 10 minutes, the sheets being 2 mm thick for the measurement of physical properties and 1 mm thick for the measurement of volume resistivity.

For comparison purposes, a compound was prepared by adding 3.5 parts of Ketjen Black™ to 100 parts of silicone rubber composition 1B and measured for volume resistivity.

The volume resistivity was measured on 10 sheets of 1 mm thick for each example using a resistivity meter Model HT-210 manufactured by Mitsubishi Oil & Fat K.K., with the range of minimum to maximum measurements being reported in Table 1.

Table 1

| | Example 1 | Example 2 | Example 3 | Comparative Example 1 |
|---|---|---|---|---|
| **Composition** | | | | |
| Silicone rubber composition 1A | 70 | 50 | 30 | - |
| Silicone rubber composition 1B | 30 | 50 | 70 | 100 |
| Dicumyl peroxide | 1.6 | 1.6 | 1.6 | 1.6 |
| Ketjen Black EC | - | - | - | 3.5 |
| **Physical properties** | | | | |
| Hardness, JIS A | 32 | 31 | 29 | - |
| Tensile strength, $N/cm^2$ $kgf/cm^2$ | 392 (40) | 363 (37) | 363 (37) | - |
| Elongation, % | 650 | 700 | 800 | - |
| Volume resistivity, $\Omega \cdot cm$ | $1x10^6$-$1x10^7$ | $7x10^6$-$9x10^7$ | $8x10^6$-$9x10^7$ | $5x10^6$-$1x10^{10}$ |

Examples 4-6

Silicone rubber composition 2A was obtained by blending the following ingredients in a two-roll mill.

| Ingredients | Parts by weight |
|---|---|
| (6) Methylphenylvinylsiloxane raw rubber consisting of 81.85 mol% of $(CH_3)_2SiO$ units, 0.15 mol% of $(CH_2=CH)(CH_3)SiO$ units, and 18 mol% of $(C_6H_5)(CH_3)SiO$ units and having a polymerization degree of 8,000 | 100 |
| (7) Ketjen Black® EC (manufactured by Ketjen Black International) | 5 |
| (8) Silica powder (specific surface area 200 $m^2/g$, Aerogel® 200, manufactured by Nihon Aerogel K.K.) | 10 |

Silicone rubber composition 2B was a dimethylvinylpolysiloxane raw rubber consisting of 99.5 mol% of $(CH_3)_2SiO$ units and 0.5 mol% of $(CH_2=CH)(CH_3)SiO$ units and having an average polymerization degree of 8,000.

Compositions 2A and 2B were blended in the proportion shown in Table 2. A rubber compound was prepared by adding dicumyl peroxide and precipitating silica Nipsil® LP having a specific surface area of 230 $m^2/g$ (manufactured by Nihon Silica K.K.) to the blend in the proportion shown in Table 2. The compound was shaped into sheets of 2 mm and 1 mm thick for the measurement of physical properties and volume resistivity as in Example 1.

The results are shown in Table 2.

Table 2

| | Example 4 | Example 5 | Example 6 |
|---|---|---|---|
| **Composition** | | | |
| Silicone rubber composition 2A | 70 | 50 | 30 |
| Silicone rubber composition 2B | 30 | 50 | 70 |
| Dicumyl peroxide | 1.6 | 1.6 | 1.6 |
| Silica powder | 5 | 5 | 5 |
| **Physical properties** | | | |
| Hardness, JIS A | 40 | 38 | 37 |
| Tensile strength, $N/cm^2$ ($kgf/cm^2$) | 392 (40) | 343 (35) | 343 (35) |
| Elongation, % | 450 | 460 | 500 |
| Volume resistivity, Ω·cm | $2x10^4$ - $3x10^5$ | $7x10^4$ - $9x10^5$ | $1x10^5$ - $5x10^6$ |

Examples 7-9 and Comparative Example 2

Silicone rubber composition 3A was obtained by blending the following ingredients in a pressure kneader.

| Ingredients | Parts by weight |
|---|---|
| (9) Methylphenylvinylsiloxane raw rubber consisting of 81.85 mol% of $(CH_3)_2SiO$ units, 0.15 mol% of $(CH_2=CH)(CH_3)SiO$ units, and 18 mol% of $(C_6H_5)(CH_3)SiO$ units and having a polymerization degree of 8,000 | 100 |
| (10) Denka Acetylene Black® (manufactured by Denki Kagaku K.K.) | 10 |

Silicone rubber composition 3B was obtained by blending the following ingredients in a kneader and heat treating the blend at 170 °C for two hours.

| Ingredients | Parts by weight |
|---|---|
| (11) Dimethylvinylpolysiloxane raw rubber consisting of 99.85 mol% of $(CH_3)_2SiO$ units and 0.15 mol% of $(CH_2=CH)(CH_3)SiO$ units and having a polymerization degree of 8,000 | 100 |
| (12) Silica powder (specific surface area 200 $m^2/g$, Aerogel® 200, manufactured by Nihon Aerogel K.K.) | 25 |
| (13) Hydroxyl-terminated dimethylsiloxane fluid having a polymerization degree of 20 | 5 |

A compound was prepared by mixing compositions 3A and 3B, quartz powder Crystalite® VXS (manufactured by Tatsumori K.K.), and 2,5-dimethyl-2,5-bis(t-butylperoxy)hexane in the proportion shown in Table 3, and then shaped into sheets of 2 mm and 1 mm thick for the measurement of physical properties and volume resistivity as in Example 1.

For comparison purposes, a compound was prepared by adding 7.5 parts of Denka Acetylene Black and Crystalite® VXS to 100 parts of silicone rubber composition 3B and measured for the same properties.

The results are shown in Table 3.

Table 3

| | Example 7 | Example 8 | Example 9 | Comparative Example 2 |
|---|---|---|---|---|
| **Composition** | | | | |
| Silicone rubber composition 3A | 70 | 50 | 30 | - |
| Silicone rubber composition 3B | 30 | 50 | 70 | 100 |
| Quartz powder | 20 | 20 | 20 | 20 |
| Acetylene Black | - | - | - | 7.5 |
| 2,5-dimethyl-2,5-bis-(t-butylperoxy)hexane | 1.0 | 1.0 | 1.0 | 1.0 |
| **Physical properties** | | | | |
| Hardness, JIS A | 45 | 44 | 42 | 42 |
| Tensile strength, $N/cm^2$ ($kgf/cm^2$) | 588 (60) | 588 (60) | 568 (58) | 784 (80) |
| Elongation, % | 600 | 580 | 610 | 700 |
| Volume resistivity, Ω·cm | $1x10^4$-$1x10^5$ | $5x10^4$-$5x10^5$ | $2x10^5$-$3x10^6$ | $1x10^4$-$1x10^{10}$ |

Examples 10-11

Silicone rubber composition 4A was obtained by blending the following ingredients in a pressure kneader.

| Ingredients | Parts by weight |
|---|---|
| (14) γ-trifluoropropylmethylsiloxane raw rubber consisting of 81.85 mol% of $(CH_3)_2SiO$ units, 0.15 mol% of $(CH_2=CH)(CH_3)SiO$ units, and 18 mol% of $(CF_3CH_2CH_2)(CH_3)SiO$ units and having a polymerization degree of 8,000 | 100 |
| (15) Denka Acetylene Black® (manufactured by Denki Kagaku K.K.) | 10 |

Silicone rubber composition 4A and silicone rubber composition 3B used in Examples 7-9 were blended in the proportion shown in Table 4, and then shaped into sheets of 2 mm and 1 mm thick for the measurement of physical properties and volume resistivity as in Example 1.

The results are shown in Table 4.

Table 4

| | Example 10 | Example 11 |
|---|---|---|
| Composition | | |
| Silicone rubber composition 4A | 50 | 30 |
| Silicone rubber composition 3B | 50 | 70 |
| Quartz powder | 20 | 20 |
| 2,5-dimethyl-2,5-bis-(t-butylperoxy)hexane | 1.0 | 1.0 |
| Physical properties | | |
| Hardness, JIS A | 44 | 43 |
| Tensile strength, $N/cm^2$ ($kgf/cm^2$) | 510 (52) | 490 (50) |
| Elongation, % | 450 | 500 |
| Volume resistivity, Ω·cm | $6x10^4$-$7x10^5$ | $1x10^5$-$9x10^5$ |

As is evident from Tables 1 through 4, the vulcanized rubbers resulting from the rubber compositions embodying the invention had a relatively stable electric resistivity in the semiconductive range as compared with the conventional silicone rubbers filled with conductive carbon black. The variation of electric resistivity was of the order of only one figure for the compositions embodying the invention, which contrasts with the conventional carbon black filled silicone rubbers showing a variation of the order of 4 to 6 figures.

## Claims

**1.** A rubber composition comprising in admixture,

(A) a silicone rubber composition including

an organopolysiloxane having the average composition formula (1):

$R^1{}_nSiO_{(4-n)/2}$ (1)

wherein $R^1$ is a monovalent hydrocarbon group having 1 to 10 carbon atoms, either unsubstituted or substituted with halogen or cyano, not more than 95mol% of the groups $R^1$ being methyl groups, and n is a positive number of from 1.95 to 2,05, and

1 to 50 parts by weight, per 100 parts by weight of the organopolysiloxane of formula (1), of conductive carbon black, and

(B) a silicone rubber composition including an organopolysiloxane having the average composition formula (2):

$R^2{}_mSiO_{(4-m)/2}$ (2)

wherein $R^2$ is a monovalent hydrocarbon group having 1 to 10 carbon atoms, either unsubstituted or substituted with halogen or cyano, at least 98mol% of the groups $R^2$ being methyl groups, and m is a positive number of from 1.95 to 2.05.

**2.** A composition of claim 1 wherein silicone rubber compositions (A) and (B) are blended in a weight ratio of 5:95 to 95:5.

**3.** A composition according to claim 1 or claim 2 which contains 20 to 80% by weight of the organopolysiloxane of formula (2).

**4.** A rubber composition according to any one of the preceding claims in which 70 to 95 mol% of the groups $R^1$ are methyl groups.

**5.** A rubber composition according to claim 4 in which 70 to 80 mol% of the groups $R^1$ are methyl groups.

**6.** A rubber composition according to any one of the preceding claims in which 5 to 20 mol% of the groups $R^1$ are phenyl groups.

**7.** A rubber composition according to any one of the preceding claims in which 0.001 to 10 mol% of the groups $R^1$ are vinyl groups.

**8.** A rubber composition according to any one of claims in which 0.001 to 2 mol% of the groups $R^2$ are vinyl groups.

**9.** A cured rubber obtainable by curing a rubber composition according to any one of claims 1 to 8.

**10.** A cured rubber according to claim 9 having a resistivity of from $10^3$ to $10^{10}$ Ω.cm.

**11.** A rubber business machine part made with a cured rubber according to claim 9 or claim 10.

**12.** A rubber business machine part according to claim 11 which is a roll.

**Patentansprüche**

**1.** Kautschukzusammensetzung umfassend in einer Mischung:

(A) eine Silikonkautschukzusammensetzung umfassend ein Organopolysiloxan mit einer durchschnittlichen Zusammensetzungsformel (1):

$R^1{}_nSiO_{(4-n)/2}$ (1)

worin $R^1$ eine einwertige Kohlenwasserstoffgruppe mit 1 bis 10 C-Atomen ist, entweder unsubstituiert oder substituiert mit Halogen oder Cyano, wobei nicht mehr als 95 Mol-% der Gruppen $R^1$ Methylgruppen sind, und worin n eine positive Zahl von 1,95 bis 2,05 ist, und

1 bis 50 Gew.-Teile leitenden Ruß pro 100 Gew.-Teile des Organopolysiloxans von Formel (1), und

(B) eine Silikonkautschukzusammensetzung umfassend ein Organopolysiloxan mit der durchschnittlichen Zusammensetzungsformel (2):

$R^2_mSiO_{(4-m)/2}$ (2)

worin $R^2$ eine einwertige Kohlenwasserstoffgruppe mit 1 bis 10 C-Atomen ist, entweder unsubstituiert oder substituiert mit Halogen oder Cyano, wobei zumindest 98 Mol-% der Gruppen $R^2$ Methylgruppen sind, und worin m eine positive Zahl von 1,95 bis 2,05 ist.

**2.** Zusammensetzung nach Anspruch 1, worin Silikonkautschukzusammensetzungen (A) und (B) in einem Gewichtsverhältnis von 5:95 bis 95:5 vermischt sind.

**3.** Zusammensetzung nach Anspruch 1 oder Anspruch 2, die 20 bis 80 Gew.-% des Organopolysiloxans von Formel (2) enthält.

**4.** Kautschukzusammensetzung nach einem der vorhergehenden Ansprüche, worin 70 bis 95 Mol-% der Gruppen $R^1$ Methylgruppen sind.

**5.** Kautschukzusammensetzung nach Anspruch 4, worin 70 bis 80 Mol-% der Gruppen $R^1$ Methylgruppen sind.

**6.** Kautschukzusammensetzung nach einem der vorhergehenden Ansprüche, worin 5 bis 20 Mol-% der Gruppen $R^1$ Phenylgruppen sind.

**7.** Kautschukzusammensetzung nach einem der vorhergehenden Ansprüche, worin 0,001 bis 10 Mol-% der Gruppen $R^1$ Vinylgruppen sind.

**8.** Kautschukzusammensetzung nach einem der vorhergehenden Ansprüche, worin 0,001 bis 2 Mol-% der Gruppen $R^2$ Vinylgruppen sind.

**9.** Gehärteter Kautschuk, der durch das Härten einer Kautschukzusammensetzung nach einem der Ansprüche 1 bis 8 hergestellt werden kann.

**10.** Gehärteter Kautschuk nach Anspruch 9, der einen Widerstand von $10^3$ bis $10^{10}$ Ω. cm aufweist.

**11.** Büromaschinenteil aus Kautschuk, der aus einem gehärteten Kautschuk nach Anspruch 9 oder Anspruch 10 besteht.

**12.** Büromaschinenteil aus Kautschuk nach Anspruch 11, der eine Walze ist.

## Revendications

**1.** Composition de caoutchouc comprenant, en mélange,
(A) une composition d'un caoutchouc de silicone contenant un organopolysiloxane ayant la formule de composition (1) :

$R^1_nSiO_{(4-n)/2}$ (1)

où $R^1$ est un groupe hydrocarbure monovalent ayant 1 à 10 atomes de carbone, soit non substitué ou substitué par halogène ou cyano, pas plus de 95% en moles des groupes $R^1$ étant des groupes méthyles, et n est un nombre positif de 1,95 à 2,05, et

1 à 50 parties en poids pour 100 parties en poids d'organopolysiloxane de formule (1), de noir de carbone conducteur, et

(B) une composition de caoutchouc de silicone contenant un organopolysiloxane ayant la formule de composition moyenne (2) :

$R^2_mSiO_{(4-m)/2}$ (2)

où $R^2$ est un groupe hydrocarbure monovalent ayant 1 à 10 atomes de carbone, soit non substitué ou substitué par halogène ou cyano, au moins 98% en moles des groupes $R^2$ étant des groupes méthyles, et m est un nombre positif compris entre 1,95 et 2,05.

**2.** Composition de la revendication 1, où les compositions de caoutchouc de silicone (A) et (B) sont mélangées à un rapport pondéral de 5:95 à 95:5.

**3.** Composition selon la revendication 1 ou la revendication 2, qui contient 20 à 80% en poids de l'organopolysiloxane de formule (2).

**4.** Composition de caoutchouc selon l'une quelconque des revendications précédentes où 70 à 95% en mole des groupes $R^1$ sont des groupes méthyles.

**5.** Composition de caoutchouc selon la revendication 4 où 70 à 80% en moles des groupes $R^1$ sont des groupes méthyles.

**6.** Composition de caoutchouc selon l'une quelconque des revendications précédentes où 5 à 20% en moles des groupes $R^1$ sont des groupes phényles.

**7.** Composition de caoutchouc selon l'une quelconque des revendications précédentes, où 0,001 à 10% en moles des groupes $R^1$ sont des groupes vinyles.

**8.** Composition de caoutchouc selon l'une quelconque des revendications où 0,001 à 2% en moles des groupes $R^2$ sont des groupes vinyles.

**9.** Caoutchouc durci pouvant être obtenu par durcissement d'une composition de caoutchouc selon l'une quelconque des revendications 1 à 8.

**10.** Caoutchouc durci selon la revendication 9, ayant une résistivité de $10^3$ à $10^{10}$ Ω.cm.

**11.** Pièce de machine de bureau en caoutchouc faite avec un caoutchouc durci selon la revendication 9 ou la revendication 10.

**12.** Pièce de machine de bureau en caoutchouc selon la revendication 11 qui est un rouleau.